(19) Europäisches Patentamt / European Patent Office / Office européen des brevets

(11) **EP 3 348 584 A1**

(12) **EUROPEAN PATENT APPLICATION**
published in accordance with Art. 153(4) EPC

(43) Date of publication:
**18.07.2018 Bulletin 2018/29**

(51) Int Cl.:
***C08F 2/44*** *(2006.01)*     ***C08F 265/04*** *(2006.01)*

(21) Application number: **16844144.2**

(86) International application number:
**PCT/JP2016/074083**

(22) Date of filing: **18.08.2016**

(87) International publication number:
**WO 2017/043281 (16.03.2017 Gazette 2017/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **07.09.2015 JP 2015175631**

(71) Applicant: **Zeon Corporation
Tokyo 100-8246 (JP)**

(72) Inventor: **KITAGAWA Masaru
Tokyo 100-8246 (JP)**

(74) Representative: **Adam, Holger
Kraus & Weisert
Patentanwälte PartGmbB
Thomas-Wimmer-Ring 15
80539 München (DE)**

(54) **METHOD FOR PRODUCING AQUEOUS DISPERSION OF HOLLOW POLYMER PARTICLES**

(57) This method for producing an aqueous dispersion of hollow polymer particles comprises: a core formation step wherein core polymer particles (A) are formed by copolymerizing a monomer mixture (a); a first shell layer formation step wherein first shell layers (B) that substantially cover the core polymer particles (A) are formed by copolymerizing a monomer mixture (b) in the presence of the core polymer particles (A); a core swelling step wherein the core polymer particles (A) are swelled by adding a base into an aqueous dispersion containing the core polymer particles (A), which have been provided with the first shell layers (B), and setting the pH of the aqueous dispersion to 7 or more; a polymerization stopping step wherein the polymerization is stopped after the core swelling step; and a shell swelling step wherein the first shell layers (B) are swelled by adding a monomer mixture (c) into the aqueous dispersion containing the core polymer particles (A), which have been provided with the first shell layers (B) and swelled, after the polymerization stopping step.

## Description

{Technical Field}

The present invention relates to a method for producing an aqueous dispersion of hollow polymer particles.

{Background Art}

Hollow polymer particles are widely used for applications such as an aqueous paint and a paper coating composition as a masking agent or an organic pigment excellent in optical properties such as opacity, whiteness, and glossiness because hollow polymer particles scatter light well, lower the light transmittance, and easy to deform the particles as compared with polymer particles in which the particles are densely and uniformly filled with polymer.

In such applications, in order to improve the effects such as reduction in weight of coating materials and coated paper sheets and the effects of the hollow polymer particles such as heat insulation, opacification, increase in gloss, and so forth, it is desired that the porosity of the blended hollow polymer particles or various properties are improved.

Conventionally, coating compositions containing hollow polymer particles have been used in the production of coated paper sheets. For example, in order to obtain an aqueous dispersion of hollow polymer particles with less aggregates, Patent Literature 1 discloses a method for obtaining an aqueous dispersion of hollow polymer particles by adding a base to an aqueous dispersion of hollow polymer particles having a four layer structure constituted by a core polymer particle, an inner shell layer, a middle shell layer, and an outer shell layer to adjust the pH to 7 or more to neutralize part of acidic groups contained in the core polymer particles, and by thus creating voids in the core polymer particles.

Also, in order to increase the porosity and obtain lightweight and low-density hollow polymer particles, Patent Literature 2 and 3 disclose a method for obtaining an aqueous dispersion of hollow polymer particles by forming shell layers on core polymer particles, then adding a base in the presence of unreacted monomers deriving the shell layers to swell the core polymer particles, and finally forming shell layers by further polymerizing the unreacted monomers. However, when the hollow polymer particles are used as an organic pigment for paper coating, it is required to not only increase the porosity but also to improve the white paper gloss, but the white paper gloss of coated paper coated with the aqueous dispersion has been not high enough.

{Citation List}

{Patent Literature}

Patent Literature 1: WO 2014/142237
Patent Literature 2: JP 4413295
Patent Literature 3: JP 2002-241448 A

{Summary of Invention}

{Technical Problem}

An object of the present invention is to provide a method for producing an aqueous dispersion of hollow polymer particles with which hollow polymer particles having high porosity and further having sufficient white paper gloss when used for the production of coated paper can be obtained.

{Solution to Problem}

As a result of diligent research to solve the above problem, the present inventor has found that the above problem can be solved by swelling a first shell layer (B) which substantially covers core polymer particles (A) in the presence of monomers after swelling the core polymer particles (A) with a base, and thus has completed the present invention.

According to the present invention,

(1) A method for producing an aqueous dispersion of hollow polymer particles, the method including a core formation step of forming core polymer particles (A) by copolymerizing a monomer mixture (a), a first shell layer formation step of forming a first shell layer (B) which substantially covers the core polymer particles (A) by copolymerizing a monomer mixture (b) in the presence of the core polymer particles (A), a core swelling step of swelling the core polymer particles (A) by adding a base into an aqueous dispersion containing the core polymer particles (A) on which the first shell layer (B) is formed, and setting a pH of the aqueous dispersion to 7 or more, a polymerization stopping step of stopping polymerization after the core swelling step, and a shell swelling step of, after the polymerization stopping step, swelling the first shell layer (B) by adding a monomer mixture (c) to the aqueous dispersion containing the core polymer particles (A) on which the first shell layer (B) is formed, the core polymer particles (A) being swelled,

(2) the method for producing an aqueous dispersion of hollow polymer particles according to (1), further including a second shell layer formation step of, after the shell swelling step, forming a second shell layer (C) by copolymerizing the monomer mixture (c) in the presence of the aqueous dispersion containing the core polymer particles (A) on which the first shell layer (B) is formed, the core polymer particles (A) and the first shell layer (B) being swelled, and

(3) the method for producing an aqueous dispersion of hollow polymer particles according to (1) or (2), wherein the first shell layer formation step includes an inner shell layer formation step of forming an inner shell layer (B1) which substantially covers the core polymer particles (A) by copolymerizing a monomer mixture (b1) in the presence of the core polymer particles (A), a middle shell layer formation step of forming a middle shell layer (B2) which substantially covers the inner shell layer (B1) by copolymerizing a monomer mixture (b2) in the presence of the core polymer particles (A) on which the inner shell layer (B1) is formed, and an outer shell layer formation step of forming an outer shell layer (B3) which substantially covers the middle shell layer (B2) by copolymerizing a monomer mixture (b3) in the presence of the core polymer particles (A) on which the inner shell layer (B1) and the middle shell layer (B2) are formed.

{Advantageous Effects of Invention}

According to the method for producing an aqueous dispersion of hollow polymer particles, hollow polymer particles having high porosity and further having sufficient white paper gloss when used for the production of coated paper can be obtained.

{Description of Embodiments}

Hereinafter, the method for producing the aqueous dispersion of the hollow polymer particles of the present invention will be described. A method for producing an aqueous dispersion of hollow polymer particles, includes a core formation step of forming core polymer particles (A) by copolymerizing a monomer mixture (a), a first shell layer formation step of forming a first shell layer (B) which substantially covers the core polymer particles (A) by copolymerizing a monomer mixture (b) in the presence of the core polymer particles (A), a core swelling step of swelling the core polymer particles (A) by adding a base into an aqueous dispersion containing the core polymer particles (A) on which the first shell layer (B) is formed, and setting the pH of the aqueous dispersion to 7 or more, a polymerization stopping step of stopping polymerization after the core swelling step, and a shell swelling step of, after the polymerization stopping step, swelling the first shell layer (B) by adding a monomer mixture (c) to the aqueous dispersion containing the core polymer particles (A) on which the first shell layer (B) is formed, and in which the core polymer particles (A) are swelled.

(Core Formation Step)

In the core formation step of the present invention, the monomer mixture (a) is copolymerized to form the core polymer particles (A).

The monomer to be contained in the monomer mixture (a) for forming the core polymer particle (A) is not particularly limited, but 20 to 50% by weight of an acid group-containing monomer and 50 to 80% by weight of a monomer copolymerizable with the acid group-containing monomer are preferably contained.

The acid group-containing monomer is a monomer having a functional group exhibiting acidity, and examples thereof include ethylenically unsaturated monocarboxylic acids such as acrylic acid, methacrylic acid, crotonic acid, and cinnamic acid; ethylenically unsaturated polycarboxylic acids such as itaconic acid, fumaric acid, maleic acid, and butenetricarboxylic acid; partially esterified products of ethylenically unsaturated polycarboxylic acids such as monobutyl fumarate, and monobutyl maleate; and sulfonic acid group-containing monomers such as styrene sulfonate. Among these, ethylenically unsaturated monocarboxylic acid monomers are preferable, (meth)acrylic acid (refers to "acrylic acid and methacrylic acid", the same applies hereafter) is more preferable, and methacrylic acid is particularly preferable because the effect of the present invention becomes more remarkable. To be noted, these monomers may be used alone or in combination of two or more kinds.

The content of the acid group-containing monomer in the monomer mixture (a) is preferably 20 to 50% by weight, and more preferably 25 to 45% by weight. When the content of the acid group-containing monomer is within the above range, a phenomenon that the content of the acid group-containing monomer is too small, and thus the swelling of the core polymer particles (A) with a base becomes difficult and it becomes difficult to create the voids in the core swelling step described later can be suppressed. In addition, a phenomenon that the content of the acid group-containing monomer is too large, and thus the core polymer particles (A) are not sufficiently covered by the first shell layer (B), the stability of the aqueous dispersion decreases in the core swelling step, and aggregates tend to be generated can be suppressed.

The copolymerizable monomer is not particularly limited as long as the copolymerizable monomer is copolymerizable with the acid group-containing monomer, and examples thereof include aromatic vinyl monomers such as styrene, α-methylstyrene, p-methylstyrene, and halogenated styrene; ethylenically unsaturated nitrile monomers such as acrylonitrile and methacrylonitrile; ethylenically unsaturated carboxylic acid ester monomers such as methyl (meth)acrylate, ethyl (meth)acrylate, butyl (meth)acrylate, 2-ethylhexyl (meth)acrylate, lauryl (meth)acrylate, glycidyl (meth)acrylate, and 2-hydroxyethyl (meth)acrylate; ethylenically unsaturated carboxylic acid amide monomers such as (meth)acrylamide, N-methylol (meth)acrylamide, and N-butoxymethyl acrylamide; conjugated diene monomers such as butadiene and isoprene; carboxylic acid vinyl ester monomers such as vinyl acetate; halogenated vinyl monomers such as vinyl chloride; halogenated vinylidene monomers such as vinylidene chloride; and vinyl pyridine. Ethylenically unsaturated carboxylic acid ester monomers are preferable, ethylenically unsaturated monocarboxylic acid alkyl ester monomers are more preferable, and methyl (meth)acrylate and butyl (meth)acrylate are particularly preferable. To be noted, the alkyl group of the ethylenically unsaturated monocarboxylic acid alkyl ester monomer preferably has 1 to 6 carbon atoms. In addition, these monomers may be used alone or in combination of two or more kinds.

The content of the copolymerizable monomer in the monomer mixture (a) is preferably 50 to 80% by weight and more preferably 55 to 75% by weight.

In addition, in the present invention, it is particularly preferable to use methyl methacrylate, butyl acrylate, and methacrylic acid in combination as monomers constituting the monomer mixture (a), and the content of these is preferably 35 to 77% by weight of methyl methacrylate, 3 to 15% by weight of butyl acrylate, and 20 to 50% by weight of methacrylic acid, more preferably 42 to 71% by weight of methyl methacrylate, 4 to 13% by weight of butyl acrylate, and 25 to 45% by weight of methacrylic acid, and particularly preferably 45 to 65% by weight of methyl methacrylate, 5 to 12% by weight of butyl acrylate, and 30 to 43% by weight of methacrylic acid.

In addition, a crosslinking monomer such as divinylbenzene, diallyl phthalate, allyl (meth)acrylate, and ethylene glycol di (meth)acrylate may be contained in the monomer mixture (a). The use amount of crosslinkable monomer in the monomer mixture (a) is desirably in such a range that stable void creation can be maintained, which is preferably 20% by weight or less, more preferably 10% by weight or less, and particularly preferably 1% by weight or less. When the use amount of crosslinkable monomer is within the above range, a phenomenon that swelling of the core polymer particles (A) with a base becomes difficult and thus creation of voids becomes difficult due to the use amount of crosslinkable monomer being too large can be suppressed.

Copolymerization of the monomer mixture (a) is usually performed in an aqueous medium. Therefore, the core polymer particles (A) obtained by the copolymerization are usually obtained in the form of an aqueous dispersion. Water is usually used as the aqueous medium, and water-soluble organic solvents such as methanol and ethanol may be used in combination as long as the dispersion stability of the polymer particles during production is not impaired. The use amount of aqueous medium is usually 100 to 1000 parts by weight and preferably 200 to 600 parts by weight with respect to 100 parts by weight of the monomer mixture (a). When the use amount of aqueous medium is within the above range, a phenomenon that the amount of the aggregate generated during polymerization is increased due to the use amount of aqueous medium being too small can be suppressed, and a phenomenon that the productivity of the hollow polymer particles becomes inferior due to the use amount of aqueous medium being too large can be suppressed.

The copolymerization method of the monomer mixture (a) is not particularly limited, but is usually an emulsion polymerization method. The polymerization type may be any one of a batch type, a semi-continuous type, and a continuous type. Polymerization pressure, polymerization temperature, and polymerization time are not particularly limited, and known conditions are adopted therefor. Upon emulsion polymerization, various additives commonly used in emulsion polymerization reaction, such as surfactants, polymerization initiators, chain transfer agents, chelating agents, electrolytes, and oxygen scavengers, may be used as auxiliary materials for polymerization.

As the surfactant to be used for emulsion polymerization, commonly known surfactants can be used, and specific examples thereof include anionic surfactants such as rosin acid salts such as potassium rosinate and sodium rosinate; fatty acid salts such as potassium oleate, potassium laurate, sodium laurate, sodium stearate, and potassium stearate; sulfuric acid ester salts of aliphatic alcohols such as sodium lauryl sulfate; alkylaryl sulfonic acids such as sodium dodecylbenzenesulfonate; nonionic surfactants such as alkyl eter sulfuric acid salts such as sodium polyoxyethylene alkyl ether sulfate; and alkyl esters, alkyl ethers or alkyl phenyl ethers of polyethylene glycol, and dispersion stabilizers such as hydrophilic synthetic polymer substances such as polyacrylic acid, polymethacrylic acid, polyvinylsulfonic acid, polyvinyl alcohol, polyvinyl pyrrolidone, and polyethylene glycol; natural hydrophilic polymer substances such as gelatin and water-soluble starch; and hydrophilic semisynthetic polymer substances such as carboxymethyl cellulose. These surfactants can be used alone or in combination of two or more kinds. Among these, alkyl ether sulfuric acid salts such as sodium polyoxyethylene alkyl ether sulfate is preferable due to a good polymerization stability.

The use amount of surfactant is preferably 0.1 to 5 parts by weight and more preferably 0.5 to 3 parts by weight with respect to 100 parts by weight of the monomer mixture (a). When the use amount of surfactant is within the above range, a phenomenon that aggregates become likely to be generated during polymerization due to the use amount of surfactant being too small can be suppressed, and a phenomenon that the porosity of the obtained hollow polymer particles decreases and various properties are degraded due to the use amount of surfactant being too large can be suppressed.

In addition, copolymerization of the monomer mixture (a) is preferably performed in the presence of a seed, and, by using a seed, controlling the particle diameter of the core polymer particles (A) to be produced can be facilitated.

The polymerization conversion rate of the monomer mixture (a) in the emulsion polymerization is usually 90% by weight or more and preferably 97% by weight or more. In addition, the composition of the resulting copolymer is generally substantially the same as the composition of the monomer mixture (a).

The method of adding the surfactant at the time of performing the emulsion polymerization is not particularly limited, and the surfactant can be added to the reaction system all at once, divided, or continuously. However, from the viewpoint of suppressing the generation of aggregates during polymerization, the method of continuously adding the surfactant to the reaction system is preferred. In addition, the monomer mixture (a) and the surfactant may be added to the reaction system as a mixture, or may be separately added to the reaction system. However, it is preferable that the monomer mixture (a) and the surfactant are mixed together with an aqueous medium and added to the reaction system in an emulsified state.

In addition, in the emulsion polymerization, an inorganic salt may be added to the reaction system and copolymerization may be performed in the presence of the inorganic salt. In particular, when a surfactant and an inorganic salt are used in combination, the generation of aggregates during polymerization can be effectively suppressed, and the particle size distribution can be narrowed. Although the inorganic salt is not particularly limited, specific examples thereof include alkali metal salts such as sodium chloride, potassium chloride, sodium sulfate, potassium sulfate, sodium nitrate, sodium carbonate, sodium hydrogen carbonate, potassium carbonate, sodium phosphate, and sodium tripolyphosphate; alkaline earth metal salts such as calcium chloride and barium sulfate; aluminum sulfate, and aluminum chloride. Among these, alkali metal salts are preferable, and sodium tripolyphosphate is more preferable. The use amount of inorganic salt is preferably 0.01 to 1 parts by weight and more preferably 0.05 to 0.5 parts by weight with respect to 100 parts by weight of the monomer mixture (a). When the use amount of inorganic salt is within the above range, a phenomenon that the effect of addition thereof becomes less likely to develop due to the use amount of inorganic salt being too small can be suppressed, and a phenomenon that aggregates becomes likely to be generated during polymerization due to the use amount of inorganic salt being too large can be suppressed. In addition, the method of adding the inorganic salt is not particularly limited, and the inorganic salt can be added to the reaction system all at once, divided, or continuously.

The volume average particle diameter of the core polymer particles (A) obtained by emulsion polymerization is preferably 100 to 600 nm and more preferably 250 to 500 nm. When the volume average particle diameter is within the above range, a phenomenon that production of hollow polymer particles having high porosity and large particle diameter becomes difficult due to the volume average particle diameter being too small can be suppressed, and a phenomenon that covering the core polymer particles (A) with the first shell layer (B) becomes difficult and creation of voids in the core polymer particles (A) becomes difficult due to the volume average particle diameter being too large can be suppressed.

(First Shell Layer Formation Step)

In the first shell layer formation step of the present invention, the monomer mixture (b) is copolymerized in the presence of the core polymer particles (A) to form the first shell layer (B) which substantially covers the core polymer particles (A).

Here, the first shell layer (B) may be one layer or two or more layers. Although the number of layers constituting the first shell layer (B) is not particularly limited, for example, a shell layer constituted by three layers of the inner shell layer (B1), the middle shell layer (B2), and the outer shell layer (B3) may be adopted as the first shell layer (B).

The first shell layer (B) constituted by these three layers can be obtained through an inner shell layer formation step of forming an inner shell layer (B1) which substantially covers the core polymer particles (A) by copolymerizing a monomer mixture (b1) in the presence of the core polymer particles (A), a middle shell layer formation step of forming a middle shell layer (B2) which substantially covers the inner shell layer (B1) by copolymerizing a monomer mixture (b2) in the presence of the core polymer particles (A) on which the inner shell layer (B1) is formed, and an outer shell layer formation step of forming an outer shell layer (B3) which substantially covers the middle shell layer (B2) by copolymerizing a monomer mixture (b3) in the presence of the core polymer particles (A) on which the inner shell layer (B1) and the middle shell layer (B2) are formed.

Hereinafter, the case where the first shell layer (B) is constituted by three layers will be described.

Inner Shell Layer Formation Step

In the inner shell layer formation step, the monomer mixture (b1) is copolymerized in the presence of the core polymer particles (A) to form the inner shell layer (B1) which substantially covers the core polymer particles (A).

The monomer to be contained in the monomer mixture (b1) for forming the inner shell layer (B1) is not particularly limited, but 1 to 10% by weight of an acid group-containing monomer and 90 to 99% by weight of a monomer copolymerizable with the acid group-containing monomer are preferably contained.

The acid group-containing monomer is not particularly limited, and the same one as the one for the core polymer particles (A) described above can be used. However, an ethylenically unsaturated monocarboxylic acid monomer is preferable, (meth)acrylic acid is more preferable, and methacrylic acid is particularly preferable. The content of the acid group-containing monomer in the monomer mixture (b1) is preferably 1 to 10% by weight, more preferably 3 to 9% by weight, and still more preferably 5 to 8% by weight.

In addition, the copolymerizable monomer is not particularly limited, but the same one as the one for the core polymer particles (A) described above can be used. Among them, an ethylenically unsaturated carboxylic acid ester monomer is preferable, an ethylenically unsaturated monocarboxylic acid alkyl ester monomer is more preferable, methyl (meth)acrylate and butyl (meth)acrylate are still more preferable, and methyl methacrylate and butyl acrylate are particularly preferable. To be noted, the alkyl group of the ethylenically unsaturated monocarboxylic acid alkyl ester monomer preferably has 1 to 6 carbon atoms. In addition, these monomers may be used alone or in combination of two or more kinds.

The content of the copolymerizable monomer in the monomer mixture (b1) is preferably 90 to 99% by weight, more preferably 91 to 97% by weight, and still more preferably 92 to 95% by weight.

In addition, in the present invention, it is particularly preferable to use methyl methacrylate, butyl acrylate, and methacrylic acid and/or acrylic acid in combination as monomers constituting the monomer mixture (b1), and the content of these is preferably 68 to 89% by weight of methyl methacrylate, 10 to 22% by weight of butyl acrylate, and 1 to 10% by weight of methacrylic acid and/or acrylic acid, more preferably 71 to 85% by weight of methyl methacrylate, 12 to 20% by weight of butyl acrylate, and 3 to 9% by weight of methacrylic acid and/or acrylic acid, and particularly preferably 74 to 81% by weight of methyl methacrylate, 14 to 18% by weight of butyl acrylate, and 5 to 8% by weight of methacrylic acid and/or acrylic acid.

The method of copolymerizing the monomer mixture (b1) in the presence of the core polymer particles (A) is not particularly limited, but a method of performing emulsion polymerization of the monomer mixture (b1) in the aqueous dispersion of the core polymer particles (A) is preferable, and the core polymer particles (A) on which the inner shell layer (B1) is formed can be obtained by this. As the polymerization type, any one of a batch type, a semi-continuous type and a continuous type may be used, the polymerization pressure, the polymerization temperature and the polymerization time are not particularly limited, and known conditions can be adopted.

In the emulsion polymerization of the monomer mixture (b1), an auxiliary substance for polymerization exemplified in the production of the core polymer particles (A) can be used. In addition, in the emulsion polymerization of the monomer mixture (b1), a chain transfer agent may be used in addition to the auxiliary substance for polymerization exemplified in the production of the core polymer particle (A). As the chain transfer agent, known chain transfer agents used for general emulsion polymerization can be used, and examples thereof include mercaptans such as octyl mercaptan, n-dodecyl mercaptan, t-dodecyl mercaptan, n-hexadecyl mercaptan, n-tetradecyl mercaptan, and t-tetradecyl mercaptan; xanthogen disulfides such as dimethyl xanthogen disulfide, diethyl xanthogen disulfide, and diisopropyl xanthogen disulfide; thiuram disulfides such as tetramethylthiuram disulfide, tetraethylthiuram disulfide, and tetrabutylthiuram disulfide; halogenated hydrocarbons such as carbon tetrachloride and carbon tetrabromide; hydrocarbons such as diphenylethylene, pentaphenylethane, and $\alpha$-methylstyrene dimer; and acrolein, methacrolein, allyl alcohol, 2-ethylhexyl thioglycolate, terpinolene, $\alpha$-terpinene, $\gamma$-terpinene, and dipentene. These chain transfer agents can be used alone or in combination of two or more kinds. Among these, mercaptans and $\alpha$-methylstyrene dimer are preferable, mercaptans are more preferable, and t-dodecyl mercaptan is particularly preferable.

Middle Shell Layer Formation Step

In the middle shell layer formation step, the monomer mixture (b2) is copolymerized in the presence of the core polymer particles (A) on which the inner shell layer (B1) is formed, and the middle shell layer (B2) which substantially covers the inner shell layer (B1) is formed.

The monomer to be contained in the monomer mixture (b2) for forming the middle shell layer (B2) is not particularly limited, but 0.2 to 2.5% by weight of an acid group-containing monomer and 97.5 to 99.8% by weight of a monomer copolymerizable with the acid group-containing monomer are preferably contained.

The acid group-containing monomer is not particularly limited, and the same one as the one for the core polymer particles (A) described above can be used. However, an ethylenically unsaturated monocarboxylic acid monomer is preferable, and (meth)acrylic acid is more preferable. The content of the acid group-containing monomer in the monomer mixture (b2) is preferably 0.2 to 2.5% by weight, more preferably 0.3 to 2.2% by weight, and still more preferably 0.4 to 1.8% by weight.

In addition, the copolymerizable monomer is not particularly limited, but the same one as the one for the core polymer particles (A) described above can be used, and among these, aromatic vinyl monomers and ethylenically unsaturated monocarboxylic acid ester monomers are preferable, aromatic vinyl monomers are more preferable, and styrene is particularly preferable. The content of the copolymerizable monomer in the monomer mixture (b2) is preferably 97.5 to 99.8% by weight, more preferably 97.8 to 99.7% by weight, and still more preferably 98.2 to 99.6% by weight.

In addition, in the present invention, it is particularly preferable to use methacrylic acid and/or acrylic acid and styrene in combination as monomers constituting the monomer mixture (b2), and the content of these is preferably 0.2 to 2.5% by weight of methacrylic acid and/or acrylic acid and 97.5 to 99.8% by weight of styrene, more preferably 0.3 to 2.2% by weight of methacrylic acid and/or acrylic acid and 97.8 to 99.7% by weight of styrene, and particularly preferably 0.4 to 1.8% by weight of methacrylic acid and/or acrylic acid and 98.2 to 99.6% by weight of styrene.

The method of copolymerizing the monomer mixture (b2) in the presence of the core polymer particles (A) on which the inner shell layer (B1) is formed is not particularly limited, but a method of performing emulsion polymerization of the monomer mixture (b2) in the aqueous dispersion of the core polymer particles (A) on which the inner shell layer (B1) is formed is preferable, and the core polymer particles (A) on which the inner shell layer (B1) and the middle shell layer (B2) are formed can be obtained by this. As the polymerization type, any one of a batch type, a semi-continuous type and a continuous type may be used, the polymerization pressure, the polymerization temperature and the polymerization time are not particularly limited, and known conditions can be adopted. In the emulsion polymerization of the monomer mixture (b2), an auxiliary substance for polymerization exemplified in the production of the core polymer particles (A) and formation of the inner shell layer (B1) can be used.

Outer Shell Layer Formation Step

In the outer shell layer formation step, the monomer mixture (b3) is copolymerized in the presence of the core polymer particles (A) on which the inner shell layer (B1) and the middle shell layer (B2) are formed, and the outer shell layer (B3) which substantially covers the middle shell layer (B2) is thus formed.

The content of the acid group-containing monomer in the monomer mixture (b3) is preferably 0.15% by weight or less, more preferably 0.1% by weight or less, and still more preferably 0.05% by weight or less, and it is particularly desirable that the content of the acid group-containing monomer is substantially zero. That is, it is preferable that the used monomer mixture (b3) does not contain an acid group-containing monomer. Here, the acid group-containing monomer is a monomer having a functional group exhibiting acidity, and typical examples thereof include ones exemplified for the core polymer particles (A) described above. When the content of the acid group-containing monomer is within the above range, a phenomenon that the amount of the aggregate in the aqueous dispersion of the hollow polymer particles increases due to the content of the acid group-containing monomer being too high can be suppressed.

In addition, the monomers other than the acid group-containing monomer contained in the monomer mixture (b3) are not particularly limited, and examples thereof include aromatic vinyl monomers such as styrene, $\alpha$-methylstyrene, p-methylstyrene, and halogenated styrene; ethylenically unsaturated nitrile monomers such as acrylonitrile and methacrylonitrile; ethylenically unsaturated carboxylic acid ester monomers such as methyl (meth)acrylate, ethyl (meth)acrylate, butyl (meth)acrylate, 2-ethylhexyl (meth)acrylate, lauryl (meth)acrylate, glycidyl (meth)acrylate, and 2-hydroxyethyl (meth)acrylate; ethylenically unsaturated carboxylic acid amide monomers such as (meth)acrylamide, N-methylol (meth)acrylamide, and N-butoxymethyl acrylamide; conjugated diene monomers such as butadiene and isoprene; carboxylic acid vinyl ester monomers such as vinyl acetate; halogenated vinyl monomers such as vinyl chloride; halogenated vinylidene monomers such as vinylidene chloride; and vinyl pyridine. These monomers can be used alone or in combination of two or more kinds.

Among these, aromatic vinyl monomers are preferable, and styrene is more preferable because it is easy to obtain an aqueous dispersion of hollow polymer particles in which the amount of aggregate is small.

Further, the used monomer mixture (b3) preferably contains only the aromatic vinyl monomer, and particularly preferably contains only styrene.

The method of copolymerizing the monomer mixture (b3) in the presence of the core polymer particles (A) on which the inner shell layer (B1) and the middle shell layer (B2) are formed is not particularly limited, but a method of performing emulsion polymerization of the monomer mixture (b3) in the aqueous dispersion of the core polymer particles (A) on which the inner shell layer (B1) and the middle shell layer (B2) are formed is preferable, and the core polymer particles (A) on which the inner shell layer (B1), the middle shell layer (B2), and the outer shell layer (B3) are formed can be obtained by this. As the polymerization type, any one of a batch type, a semi-continuous type and a continuous type may be used, the polymerization pressure, the polymerization temperature and the polymerization time are not particularly limited, and known conditions can be adopted. In the emulsion polymerization of the monomer mixture (b3), an auxiliary substance for polymerization exemplified in the production of the core polymer particles (A) and formation of the inner shell layer (B1) and the middle shell layer (B2) can be used.

In the present invention, the weight ratio of the monomer mixtures for forming the core polymer particles (A), the inner shell layer (B1), the middle shell layer (B2), and the outer shell layer (B3) is, in terms of a weight ratio of "monomer mixture (a)/monomer mixture (b1)/monomer mixture (b2)/monomer mixture (b3)", preferably (1 to 40)/(1 to 40)/(10 to 88)/(10 to 88), more preferably (2 to 30)/(2 to 30)/(20 to 76)/(20 to 76), and particularly preferably (5 to 20)/(5 to 20)/(30 to 60)/(30 to 60) from the viewpoint of more remarkably obtaining the effect of the present invention.

(Core Swelling Step)

In the core swelling step of the present invention, a base is added to an aqueous dispersion containing the core polymer particles (A) on which the first shell layer (B) is formed to swell the core polymer particles (A) by adjusting the pH of the aqueous dispersion to 7 or more.

That is, the core swelling step is a step of adding a base to the aqueous dispersion containing the core polymer particles (A) on which the first shell layer (B) is formed to adjust the pH of the aqueous dispersion to 7 or more, and thereby neutralizing at least part of acidic groups contained in the core polymer particles (A) to create voids.

The base may be either of a volatile base and a nonvolatile base, and specific examples of the volatile base include ammonia, ammonium hydroxide, morpholine, trimethylamine, and triethylamine. Specific examples of nonvolatile base include alkali metal hydroxides such as sodium hydroxide, potassium hydroxide, and lithium hydroxide; alkaline earth metal hydroxides such as calcium hydroxide and magnesium hydroxide; alkaline metal (bi)carbonates such as sodium carbonate and potassium bicarbonate; and ammonium (bi)carbonates such as ammonium carbonate and ammonium bicarbonate. Among these, volatile bases are preferable, and ammonia and ammonium hydroxide are more preferable.

The amount of the base to be used is not particularly limited as long as the amount is sufficient to neutralize at least part of acidic groups of the core polymer particles (A) to make the pH of the aqueous dispersion 7 or more. In addition, when adding a base, it is preferable that the base is added in the form of an aqueous solution from the viewpoint of suppressing the generation of aggregates at the time of addition, and the concentration thereof in the aqueous solution at that time is preferably 0.5 to 20% by weight and more preferably 1 to 10% by weight. In addition, at this time, from the viewpoint of suppressing the generation of aggregates during the base treatment, an anionic surfactant and/or a nonionic surfactant may be added before adding the base.

In addition, the treatment time at the time of performing the core swelling step may be time required for the base to sufficiently diffuse into the core polymer particles (A), may selected within the range of usually 5 to 120 minutes and preferably 10 to 90 minutes. In addition, the temperature at the time of performing the core swelling step is preferably not less than temperature at which the core polymer particles (A) are sufficiently softened and more preferably 70 to 95°C, from the viewpoint of diffusibility of the base.

(Polymerization Stopping Step)

The polymerization stopping step in the present invention is a step of stopping the polymerization after performing the core swelling step. The method of stopping the polymerization is not particularly limited, but it is preferable to stop the polymerization by adding a polymerization terminator.

Examples of the polymerization terminator include hydroxylamine, hydroxylamine sulfate, diethylhydroxyamine, hydroxyamine sulfonic acid and alkali metal salts thereof, and sodium dimethyldithiocarbamate. The use amount of polymerization terminator is not particularly limited, but is preferably 0.01 to 2 parts by weight with respect to 100 parts by weight of the total monomers used for polymerization of the core polymer particles (A) and the first shell layer (B) .

(Shell Swelling Process)

The shell swelling step in the present invention is a step of swelling the first shell layer (B) by adding the monomer mixture (c) to the aqueous dispersion containing the core polymer particles (A) on which the first shell layer (B) is formed and in which the core polymer particles (A) are swelled, after the polymerization stopping step. In addition, the first shell layer (B) is plasticized by performing the shell swelling step, and thus the core polymer particles (A) can be swelled. That is, in the present invention, the porosity can be increased by two steps of the core swelling step and the shell swelling step.

The monomer mixture (c) is not particularly limited, but the same one as ones mentioned above for the monomer mixture (b3) can be used.

The use amount of monomer mixture (c) is not particularly limited, but is preferably 0.1 to 45 parts by weight and more preferably 1 to 30 parts by weight with respect to 100 parts by weight of the total monomers used for polymerization of the core polymer particles (A) and the first shell layer (B).

In addition, the treatment time at the time of performing the shell swelling step is preferably 5 to 120 minutes. In addition, the temperature at the time of performing the shell swelling step is preferably 10 to 95°C and particularly preferably 75 to 95°C from the viewpoint of plasticization of the shell.

(Second Shell Layer Formation Step)

In the present invention, it is preferable that a second shell layer formation step of forming a second shell layer (C) by copolymerizing the monomer mixture (c) in the presence of the aqueous dispersion containing core polymer particles (A) on which the first shell layer (B) is formed and in which the core polymer particles (A) and the first shell layer (B) have been swelled is performed, after the shell swelling step.

When forming the second shell layer (C), it is preferable to start polymerization of the monomer mixture (c) by adding a polymerization initiator after the shell swelling step.

Examples of the polymerization initiator include azo compounds such as azobisisobutyronitrile; organic peroxides such as diisopropylbenzene hydroperoxide, cumene hydroperoxide, benzoyl peroxide, and lauroyl peroxide; and inorganic peroxides such as sodium persulfate and ammonium persulfate. These polymerization initiators can be used alone or in combination of two or more kinds. The use amount of polymerization initiator is not particularly limited, but is preferably 0.01 to 1.0 part by weight with respect to 100 parts by weight of the total monomers used for polymerization of the core polymer particles (A) and the first shell layer (B) .

To be noted, in the production method of the present invention, formation of the core polymer particles (A), formation of the first shell layer, the core swelling step, the polymerization stopping step, the shell swelling step, and formation of the second shell layer (D) may be performed step by step in the same reactor, or after a preceding step, the product obtained in the preceding step is transferred to another reactor to carry out the next step may be adopted.

Then, in the production method of the present invention, in order to remove residual monomers contained in the aqueous dispersion of the hollow polymer particles obtained as described above, steam stripping of blowing steam (saturated aqueous vapor) into the aqueous dispersion may be performed. As the steam stripping, conventionally known methods can be used without limitation. In addition, the steam stripping may be performed under such conditions that the content of the residual monomers contained in the aqueous dispersion of the hollow polymer particles is preferably 0.01% by weight or less.

In addition, after removing the residual monomers by steam stripping, the pH and the solid content concentration of the aqueous dispersion may be adjusted as necessary.

In the aqueous dispersion of the hollow polymer particles thus obtained by the production method of the present invention, a number average particle diameter of the hollow polymer particles is preferably 0.5 to 2.0 $\mu$m, more preferably 0.8 to 1.7 $\mu$m, and still more preferably 1.0 to 1.5 $\mu$m. The number average particle diameter of the hollow polymer particles can be determined by, for example, measuring the maximum particle diameter of each of 200 hollow polymer particles by a transmission electron microscope and simply averaging this.

In addition, the porosity of the hollow polymer particles is preferably 30 to 65%, more preferably 40 to 60%, and still more preferably 53 to 58%. The porosity of the hollow polymer particles can be determined by measuring the maximum particle diameter and the maximum diameter of the voids for each of 200 hollow polymer particles by a transmission electron microscope and simply averaging the porosity obtained from the results of the measurement.

According to the method for producing an aqueous dispersion of hollow polymer particles, hollow polymer particles having high porosity and further having sufficient white paper gloss when used for the production of coated paper can be obtained.

In addition, the first shell layer (B) is plasticized by stopping polymerization and performing the shell swelling step after the core swelling step, and thus the core polymer particles (A) can be swelled. That is, in the present invention, the porosity can be increased by two steps of the core swelling step and the shell swelling step. Furthermore, ununiformity of the core polymer particles (A) can be corrected by the two steps of the core swelling step and the shell swelling step, and thus the morphology of the hollow polymer particles can be made a spherical shape instead of a bowl shape. Therefore, when the hollow polymer particles obtained by the production method of the present invention is used as an organic pigment for coated paper, white gloss and print gloss can be improved.

The aqueous dispersion of the hollow polymer particles obtained by the production method of the present invention can contain, for example, an inorganic pigment such as calcium carbonate, clay, barium sulfate, calcium carbonate, talc, titanium oxide, satin white, aluminum hydroxide, silica, or mica, and can be used as a composition for coated paper. Further, coated paper can be obtained by applying such a composition for coated paper on base paper to form a surface coating layer. In addition, the white paper gloss of the coated paper thus obtained is preferably 80% or more.

The coated paper including the hollow polymer particles obtained by the method for producing an aqueous dispersion of hollow polymer particles of the present invention is excellent in white gloss, printing gloss, and the like, and, by utilizing such characteristics, can be suitably used for publications such as books and magazines, or printed products for commercial use such as leaflets, pamphlets, and posters.

{Examples}

Hereinafter, the present invention will be described more specifically with reference to Examples, but the present invention is not limited to these examples. To be noted, unless otherwise specified, "part" is on the weight basis.
In addition, tests and evaluations were performed by the following method.

Weight Average Particle Diameter of Hollow Polymer Particles

For 200 hollow polymer particles obtained in each Example and each Comparative Example, the maximum particle diameter of each particle was measured by using a transmission electron microscope, and the weight average particle diameter was obtained by arithmetically averaging the maximum particle diameter.

Porosity of Hollow Polymer Particles

The maximum particle diameter and maximum diameter of voids of each of the 200 hollow polymer particles obtained in each Example and each Comparative Example were measured by using a transmission electron microscope, and a value obtained by averaging "porosity" calculated by the following formula was determined as the "porosity" of the hollow polymer particles.

$$\text{``Porosity''} = [(\text{maximum diameter of void})^3/(\text{maximum particle diameter})^3] \times 100 \ (\%)$$

White Paper Gloss

Using a gloss meter (trade name "GM-26D", manufactured by Murakami Color Co., Ltd.), the reflectance (unit: %) of light on the surface of the coated paper was measured for the coated paper obtained in each Example and each Comparative Example under the conditions of an incident angle of 75 degrees and a reflection angle of 75 degrees. It can be determined that more excellent white paper gloss is obtained in the case where the value of the obtained reflectance is larger.

{Example 1}

Production of Core Polymer Particles (A)

An emulsion of the monomer mixture (a) for forming the core polymer was prepared by adding and stirring 100 parts of monomers (50% by weight of methyl methacrylate, 10% by weight of butyl acrylate, and 40% by weight of methacrylic acid), 0.9 parts of sodium polyoxyethylene alkyl ether sulfate (alkyl group: $C_{12}H_{35}$, number of addition of ethylene oxide: 18) as the surfactant, 0.15 parts of sodium tripolyphosphate, and 80 parts of ion-exchanged water in a pressure-proof vessel equipped with a stirring device.
In addition, separately from the above, 40 parts of ion-exchanged water and 0.28 parts of seed latex (methyl methacrylate polymer particles having a volume average particle diameter of 82 nm) were added to a pressure-proof reactor equipped with a stirring device, and the temperature was raised to 85°C.
Then, 1.63 parts of a 3% aqueous solution of potassium persulfate were added to the pressure-proof reactor to which the ion-exchanged water and seed latex had been added, and 7% by weight of the total amount of the emulsion of the monomer mixture (a) obtained as described above was continuously added for 3 hours and then reacted for further 1 hour. Thereafter, 250 parts of ion-exchanged water and 18.6 parts of a 3% aqueous solution of potassium persulfate were added, and the remaining part of the emulsion of the monomer mixture (a) obtained as described above was continuously added for 3 hours while maintaining the reaction temperature at 85°C. Then, after completing the continuous addition of the emulsion, the reaction was further continued for 2 hours to obtain an aqueous dispersion containing the core polymer particles (A) which were alkali swellable matter. To be noted, the polymerization conversion rate at this time was 99%.

Preparation of Each Monomer Mixture

An emulsion of the monomer mixture (b1) for forming the inner shell layer (B1) was prepared by adding and then stirring 100 parts of monomers (78% by weight of methyl methacrylate, 16% by weight of butyl acrylate, and 6% by weight of methacrylic acid), 0.2 parts of sodium polyoxyethylene alkyl ether sulfate, and 160 parts of ion-exchanged water in a reaction vessel equipped with a stirring device.

In addition, separately from above, an emulsion of the monomer mixture (b2) for forming the middle shell layer (B2) was prepared by adding and then stirring 100 parts of monomers (99.0% by weight of styrene and 1.0% by weight of methacrylic acid), 0.6 parts of sodium polyoxyethylene alkyl ether sulfate, and 80 parts of ion-exchanged water in a reaction vessel equipped with a stirring device.

Further, separately from above, an emulsion of the monomer mixture (b3) for forming the outer shell layer (B3) was prepared by adding and then stirring 100 parts of monomers (100% by weight of styrene), 0.49 parts of sodium polyoxyethylene alkyl ether sulfate, and 73.2 parts of ion-exchanged water in a reactor equipped with a stirring device.

Formation of First Shell Layer (B) (Inner Shell Layer (B1), Middle Shell Layer (B2) and Outer Shell Layer (B3))

Then, 250 parts of ion-exchanged water and the aqueous dispersion containing the core polymer particles (A) obtained as described above were added to a reaction vessel equipped with a stirring device such that the weight of the core polymer particles (A) was about 10 parts (that is, such that the blending amount of used monomer mixture (a) was 10 parts), and the temperature was raised to 85°C. Subsequently, 10 parts of a 4% by weight aqueous solution of potassium persulfate were added to the reaction vessel, and then the emulsion (the amount of the monomer mixture (b1) was 10 parts) of the monomer mixture (b1) for forming the inner shell layer (B1) was continuously added to the reaction vessel for 20 minutes while maintaining 85°C. Thus, polymerization was performed and the inner shell layer (B1) was formed.

Subsequently, the emulsion (the amount of the monomer mixture (b2) was 49 parts) of the monomer mixture (b2) for forming the middle shell layer (B2) was continuously added to the reaction vessel for 65 minutes while maintaining the reaction vessel at 85°C, and thus polymerization was performed and the middle shell layer (B2) was formed.

Further, the emulsion (the amount of the monomer mixture (b3) was 41 parts) of the monomer mixture (b3) for forming the outer shell layer (B3) was continuously added to the reaction vessel for 55 minutes while maintaining the reaction vessel at 85°C, and thus polymerization was performed and the outer shell layer (B3) was formed.

Core Swelling Step (Base Treatment)

Immediately after forming the first shell layer (B) (the inner shell layer (B1), the middle shell layer (B2), and the outer shell layer (B3)) in this order by the method described above, the core polymer particles (A) were swelled by a base by adding 20 parts of a 5% by weight ammonia water to the reaction vessel, and then performing base treatment for 1 hour at 90°C. To be noted, the pH of the reaction solution was 7 to 12 over 1 hour during the base treatment.

Polymerization Stopping Step

After performing the core swelling step by the method described above, 0.6 parts of 10% by weight diethylhydroxyamine were added to the reaction vessel as a polymerization terminator. In this state, 10 minutes passed.

Shell Swelling Step

After 10 minutes from the addition of the polymerization terminator, 5 parts of the monomer mixture (c) (styrene: 5 parts) were added to the reaction vessel. In that state, 2 hours passed.

Second Shell Layer (C) Formation Step

After performing the shell swelling step by the method described above, 10 parts of a 4% by weight aqueous solution of potassium persulfate were added, and the reaction was continued for further 4 hours to obtain an aqueous dispersion containing hollow polymer particles. To be noted, the polymerization conversion rate at this time was 99%. The weight average particle diameter and the porosity of the obtained hollow polymer particles are shown in Table 1.

Preparation of Composition for Coated Paper

Into a pressure-proof vessel equipped with a stirring device, 70 parts of kaolin clay (trade name "Astra Coat", manufactured by Imerys Minerals Japan) as an inorganic pigment, 30 parts of calcium carbonate (trade name "FMT 90", manufactured by Fimatec Ltd.) as an inorganic pigment, 0.15 parts of sodium polyacrylate (trade name "Aron T-50", manufactured by Toagosei Co., Ltd.) as a dispersant, 0.5 parts of calcium stearate (trade name "Nopcoat C-104HS", manufactured by San Nopco) as a slip agent, 3 parts of phosphated esterified starch (trade name "MS-4600", manufactured by Nihon Shokuhin Kako Co., Ltd.), and 9 parts of a carboxy-modified styrene-butadiene copolymer latex (trade name "Nipol LX407F", manufactured by Zeon Corporation) were added, and then 7 parts of the hollow polymer particles obtained as described above in solid content and ion-exchanged water were added, mixed, and stirred to obtain a composition for coated paper having a solid content concentration of 62%.

Preparation of Coated Paper

The obtained composition for coated paper was applied on one surface of base paper having a basis weight of 65 g/m$^2$ at 10g/m$^2$, dried at 120°C, and subjected to super calendering treatment to obtain coated paper. The white paper gloss of the obtained coated paper was measured. The results are shown in Table 1.

{Example 2}

An aqueous dispersion of hollow polymer particles was obtained in the same manner as in Example 1 except that the amount of the monomer mixture (c) added in the shell swelling step was changed to 10 parts (styrene: 10 parts). The weight average particle diameter and the porosity of the obtained hollow polymer particles are shown in Table 1. Further, preparation of a composition for coated paper and preparation of coated paper were performed in the same manner as in Example 1 except that the type of the used hollow polymer particles was changed to the hollow polymer particles obtained in Example 2. The results are shown in Table 1.

{Example 3}

An aqueous dispersion of hollow polymer particles was obtained in the same manner as in Example 1 except that the amount of the monomer mixture (c) added in the shell swelling step was changed to 25 parts (styrene: 25 parts). The weight average particle diameter and the porosity of the obtained hollow polymer particles are shown in Table 1. Further, preparation of a composition for coated paper and preparation of coated paper were performed in the same manner as in Example 1 except that the type of the used hollow polymer particles was changed to the hollow polymer particles obtained in Example 3. The results are shown in Table 1.

{Example 4}

An aqueous dispersion of hollow polymer particles was obtained in the same manner as in Example 1 except that 30 parts of a 10% by weight ammonia water were added and the type of the monomer mixture (c) added in the core swelling step was changed to methyl methacrylate. The weight average particle diameter and the porosity of the obtained hollow polymer particles are shown in Table 1. Further, preparation of a composition for coated paper and preparation of coated paper were performed in the same manner as in Example 1 except that the type of the used hollow polymer particles was changed to the hollow polymer particles obtained in Example 4. The results are shown in Table 1.

{Example 5}

An aqueous dispersion of hollow polymer particles was obtained in the same manner as in Example 1 except that the added base was changed to 100 parts of a 15% by weight ammonia water in the core swelling step. The weight average particle diameter and the porosity of the obtained hollow polymer particles are shown in Table 1. Further, preparation of a composition for coated paper and preparation of coated paper were performed in the same manner as in Example 1 except that the type of the used hollow polymer particles was changed to the hollow polymer particles obtained in Example 5. The results are shown in Table 1.

{Comparative Example 1}

Production of the core polymer particles (A) and formation of the first shell layer (B) were performed in the same manner as in Example 1, and the order of the subsequent steps was changed. Specifically, after producing the core polymer particles (A) and forming the first shell layer (B), the polymerization stopping step, the shell swelling step, the core swelling step, and formation of the second shell layer (C) were performed in this order.

That is, after producing the core polymer particles (A) and forming the first shell layer (B) in the same manner as in Example 1, as a polymerization stopping step, 0.6 parts of 10% by weight diethylhydroxylamine as a polymerization terminator were added to the reaction vessel, and 10 minutes passed in this state.

Next, after 10 minutes from the addition of the polymerization terminator, 5 parts of the monomer mixture (c) (styrene: 5 parts) were added to the reaction vessel as a shell swelling step, and 2 hours passed in this state.

After performing the shell swelling step, the core swelling step was performed. Specifically, the core polymer particles (A) were swelled by adding 20 parts of 5% by weight ammonia water and performing base treatment for 1 hour at 90°C. To be noted, the pH of the reaction solution was 7 to 12 over 1 hour during the base treatment.

After performing the core swelling step, the second shell layer (C) was formed. Specifically, 10 parts of a 4% by weight aqueous solution of potassium persulfate were added, and the reaction was continued for further 4 hours to obtain an aqueous dispersion containing hollow polymer particles. The weight average particle diameter and the porosity of the obtained hollow polymer particles are shown in Table 2. Further, preparation of a composition for coated paper and preparation of coated paper were performed in the same manner as in Example 1 except that the type of the used hollow polymer particles was changed to the hollow polymer particles obtained in Comparative Example 1. The results are shown in Table 2.

{Comparative Example 2}

An aqueous dispersion of hollow polymer particles was obtained in the same manner as in Comparative Example 1 except that the polymerization stopping step was omitted (that is, no polymerization terminator was added to the reaction vessel). The weight average particle diameter and the porosity of the obtained hollow polymer particles are shown in Table 2. Further, preparation of a composition for coated paper and preparation of coated paper were performed in the same manner as in Example 1 except that the type of the used hollow polymer particles was changed to the hollow polymer particles obtained in Comparative Example 2. The results are shown in Table 2.

{Table 1}

| | | | Examples | | | | |
|---|---|---|---|---|---|---|---|
| | | | 1 | 2 | 3 | 4 | 5 |
| Core polymer particles (A) | | Composition of monomer mixture (a): (% by weight)<br>  Methyl methacrylate<br>  Butyl acrylate<br>  Methacrylic acid | 50<br>10<br>40 | 50<br>10<br>40 | 50<br>10<br>40 | 50<br>10<br>40 | 50<br>10<br>40 |
| | | Use amount of monomer mixture (a): (part) | 10 | 30 | 10 | 10 | 10 |
| First shell layer (B) | Inner shell layer (B1) | Composition of monomer mixture (b1): (% by weight)<br>  Methyl methacrylate<br>  Butyl acrylate<br>  Methacrylic acid | 78<br>16<br>6 | 78<br>16<br>6 | 78<br>16<br>6 | 78<br>16<br>6 | 78<br>16<br>6 |
| | | Use amount of nonomer mixture (b1) : (part) | 10 | 10 | 10 | 10 | 10 |
| | Middle shell layer (B2) | Composition of monomer mixture (b2) : (% by weight)<br>  Styrene<br>  Methacrylic acid | 99<br>1 | 99<br>1 | 99<br>1 | 99<br>1 | 99<br>1 |
| | | Use amount of monomer mixture (b2): (part) | 49 | 49 | 49 | 49 | 49 |

**EP 3 348 584 A1**

(continued)

| | | | Examples | | | | |
|---|---|---|---|---|---|---|---|
| | | | 1 | 2 | 3 | 4 | 5 |
| | Outer shell layer (B3) | Composition of monomer mixture (b3): (% by weight)<br>  Styrene | 100 | 100 | 100 | 100 | 100 |
| | | Use amount of monomer mixture (b3): (part) | 41 | 41 | 41 | 41 | 41 |
| Core swelling step | | Use amount of ammonia: (part) | 1 | 1 | 1 | 3 | 15 |
| Polymerization stopping step | | Use amount of diethylhydroxyamine: (part) | 0.06 | 0.06 | 0.06 | 0.06 | 0.06 |
| Shell swelling step (Second shell layer (C)) | | Composition of monomer mixture (c): (% by weight)<br>  Styrene<br>  Methyl methacrylate | 100<br>- | 100<br>- | 100<br>- | -<br>100 | 100<br>- |
| | | Use amount of monomer mixture (c): (part) | 5 | 10 | 25 | 5 | 5 |
| Hollow polymer particle | | | | | | | |
|   Weight average particle diameter ($\mu$m) | | | 1.2 | 1.2 | 1.3 | 1.2 | 1.1 |
|   Porosity (%) | | | 57 | 56 | 55 | 55 | 54 |
| Composition for coated paper | | | | | | | |
|   Solid content concentration (%) | | | 62 | 62 | 62 | 62 | 62 |
|   Contained parts of hollow polymer particles (part) | | | 7 | 7 | 7 | 7 | 7 |
| Coated paper characteristic | | | | | | | |
|   White paper gloss (%) | | | 81.4 | 81.0 | 80.7 | 81.0 | 80.2 |

{Table 2}

| | | Comparative Examples | |
|---|---|---|---|
| | | 1 | 2 |
| Core polymer particles (A) | Composition of monomer mixture (a): (% by weight)<br>  Methyl methacrylate<br>  Butyl acrylate<br>  Methacrylic acid | 50<br>10<br>40 | 50<br>10<br>40 |
| | Use amount of monomer mixture (a): (part) | 10 | 10 |

(continued)

| | | | Comparative Examples | |
|---|---|---|---|---|
| | | | 1 | 2 |
| First shell layer (B) | Inner shell layer (B1) | Composition of monorer mixture (b1): (% by weight)<br>　Methyl methacrylate<br>　Butyl acrylate<br>　Methacrylic acid | 78<br>16<br>6 | 78<br>16<br>6 |
| | | Use amount of monomer mixture (b1): (part) | 10 | 10 |
| | Middle shell layer (B2) | Composition of monomer mixture (b2): (% by weight)<br>　Styrene<br>　Methacrylic acid | 99<br>1 | 99<br>1 |
| | | Use amount of monomer mixture (b2): (part) | 49 | 49 |
| | Outer shell layer (B3) | Composition of monomer mixture (b3): (% by weight)<br>　Styrene | 100 | 100 |
| | | Use amount of monomer mixture (b3): (part) | 41 | 41 |
| Polymerization stopping step | | Use amount of diethylhydroxyamine: (part) | 0.06 | - |
| Shell swelling step (Second shell layer (C)) | | Composition of monomer mixture (c): (% by weight)<br>　Styrene | 100 | 100 |
| | | Use amount of monomer mixture (c): (part) | 5 | 5 |
| Core swelling step | | Use amount of ammonia: (part) | 1 | 1 |
| Hollow polymer particle | | | | |
| 　Weight average particle diameter ($\mu$m) | | | 1.1 | 1.1 |
| 　Porosity (%) | | | 52 | 51 |
| Composition for coated paper | | | | |
| 　Solid content concentration (%) | | | 62 | 62 |
| 　Contained parts of hollow polymer particles (part) | | | 7 | 7 |
| Coated paper characteristic | | | | |
| 　White paper gloss (%) | | | 79.5 | 79.1 |

According to Table 1 and Table 2, hollow polymer particles having high porosity is obtained by a method for producing an aqueous dispersion of hollow polymer particles including a core formation step of forming core polymer particles (A) by copolymerizing a monomer mixture (a), a first shell layer formation step of forming a first shell layer (B) which substantially covers the core polymer particles (A) by copolymerizing a monomer mixture (b) in the presence of the core polymer particles (A), a core swelling step of swelling the core polymer particles (A) by adding a base into an aqueous dispersion containing the core polymer particles (A) on which the first shell layer (B) is formed, and setting the pH of the aqueous dispersion to 7 or more, a polymerization stopping step of stopping polymerization after the core swelling step, and a shell swelling step of, after the polymerization stopping step, swelling the first shell layer (B) by adding a monomer mixture (c) to the aqueous dispersion containing the core polymer particles (A) on which the first shell layer (B) is formed, and in which the core polymer particles (A) are swelled, and white paper gloss of coated paper characteristic obtained by using these hollow polymer particles is excellent (Examples 1 to 5).

In contrast, in Comparative Example 1 in which the order of the core swelling step and the shell swelling step was changed and the shell swelling step was performed before the core swelling step, since the step of increasing the porosity was performed only in one step of the core swelling step, the porosity of the obtained hollow polymer particles was lower than that of Example 1.

In addition, in Comparative Example 2 in which the order of the core swelling step and the shell swelling step was changed, the shell swelling step was performed before the core swelling step, and the polymerization stopping step was omitted, the monomer mixture (c) was consumed by polymerization, and thus swelling of the first shell layer (B) was smaller than in Comparative Example 1, and the porosity of the obtained hollow polymer particles was low. In addition, the porosity was also lower than in Example 1. Furthermore, the white paper gloss of the coated paper was inferior.

**Claims**

1.  A method for producing an aqueous dispersion of hollow polymer particles, the method comprising:

    a core formation step of forming core polymer particles (A) by copolymerizing a monomer mixture (a);
    a first shell layer formation step of forming a first shell layer (B) which substantially covers the core polymer particles (A) by copolymerizing a monomer mixture (b) in the presence of the core polymer particles (A);
    a core swelling step of swelling the core polymer particles (A) by adding a base into an aqueous dispersion containing the core polymer particles (A) on which the first shell layer (B) is formed, and setting a pH of the aqueous dispersion to 7 or more;
    a polymerization stopping step of stopping polymerization after the core swelling step; and
    a shell swelling step of, after the polymerization stopping step, swelling the first shell layer (B) by adding a monomer mixture (c) to the aqueous dispersion containing the core polymer particles (A) on which the first shell layer (B) is formed, the core polymer particles (A) being swelled.

2.  The method for producing an aqueous dispersion of hollow polymer particles according to claim 1, further comprising a second shell layer formation step of, after the shell swelling step, forming a second shell layer (C) by copolymerizing the monomer mixture (c) in the presence of the aqueous dispersion containing the core polymer particles (A) on which the first shell layer (B) is formed, the core polymer particles (A) and the first shell layer (B) being swelled.

3.  The method for producing an aqueous dispersion of hollow polymer particles according to claim 1 or 2, wherein the first shell layer formation step comprises:

    an inner shell layer formation step of forming an inner shell layer (B1) which substantially covers the core polymer particles (A) by copolymerizing a monomer mixture (b1) in the presence of the core polymer particles (A);
    a middle shell layer formation step of forming a middle shell layer (B2) which substantially covers the inner shell layer (B1) by copolymerizing a monomer mixture (b2) in the presence of the core polymer particles (A) on which the inner shell layer (B1) is formed; and
    an outer shell layer formation step of forming an outer shell layer (B3) which substantially covers the middle shell layer (B2) by copolymerizing a monomer mixture (b3) in the presence of the core polymer particles (A) on which the inner shell layer (B1) and the middle shell layer (B2) are formed.

## INTERNATIONAL SEARCH REPORT

| International application No. |
| --- |
| PCT/JP2016/074083 |

### A. CLASSIFICATION OF SUBJECT MATTER

*C08F2/44*(2006.01)i, *C08F265/04*(2006.01)i

According to International Patent Classification (IPC) or to both national classification and IPC

### B. FIELDS SEARCHED

Minimum documentation searched (classification system followed by classification symbols)
C08F2/00-2/60, C08F251/00-297/08

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 07-196747 A (Korea Chemical Co., Ltd.),<br>01 August 1995 (01.08.1995),<br>claim 3; paragraphs [0053] to [0054], [0060]<br>& US 5639805 A<br>claims 1 to 12<br>& KR 10-1994-0007353 B1 | 1-3<br>3 |
| X<br>Y | JP 2002-200846 A (Nippon Paper Industries Co.,<br>Ltd.),<br>16 July 2002 (16.07.2002),<br>paragraphs [0034] to [0035]<br>(Family: none) | 1-3<br>3 |

| ☒ | Further documents are listed in the continuation of Box C. | ☐ | See patent family annex. |
| --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 September 2016 (29.09.16) | 11 October 2016 (11.10.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

**INTERNATIONAL SEARCH REPORT**

International application No.

PCT/JP2016/074083

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 10-182761 A  (Nippon Zeon Co., Ltd.),<br>07 July 1998 (07.07.1998),<br>claims 1 to 4; paragraphs [0032], [0039],<br>[0045] to [0047]<br>(Family: none) | 1-3<br>3 |
| X<br>Y | JP 2014-070078 A  (Nippon Zeon Co., Ltd.),<br>21 April 2014 (21.04.2014),<br>claims 1 to 2; paragraphs [0036], [0046] to<br>[0048]<br>(Family: none) | 1-3<br>3 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014142237 A
- JP 4413295 B
- JP 2002241448 A